# EUROPÄISCHE PATENTSCHRIFT

(11) **EP 0 615 936 B1**
(45) Veröffentlichungstag und Bekanntmachung des Hinweises auf die Patenterteilung: **03.12.1997**
(21) Anmeldenummer: 94103536.2
(22) Anmeldetag: 09.03.1994
(51) Int. Cl.: B65G 67/62

(54) **Becherwerk**
Bucket elevator
Elévateur à godets

(30) Priorität: 15.03.1993 DE 4308133
(43) Veröffentlichungstag der Anmeldung: 21.09.1994
(73) Patentinhaber: Krupp Fördertechnik GmbH, 45143 Essen (DE)
(72) Erfinder: Steckel, Horst, D-66386 St. Ingbert-Rohrbach (DE); Stenger, Erich, D-66583 Spiesen-Elversberg (DE)

(56) Entgegenhaltungen:
- DE-A- 3 139 475
- DE-A- 3 608 116
- DE-A- 4 100 852
- US-A- 4 890 719
- PATENT ABSTRACTS OF JAPAN vol. 7, no. 163 (M-229) (1308) 16. Juli 1983 & JP-A-58 069 635 (UBE KOSAN) 25. April 1983
- SOVIET PATENTS ABSTRACTS Section PQ, Week 9234, 7. Oktober 1992 Derwent Publications Ltd., London, GB; Class Q35, AN 92-282244 & SU-A-1 689 263 (RIVER PORTS RES PRODN)

## Beschreibung

Die Erfindung betrifft ein Becherwerk, insbes. Schiffsbe- oder -entlader, mit einem im wesentlichen sich vertikal erstreckenden Bereich, einem an seinem unteren Ende sich anschließenden und sich im wesentlichen horizontal erstreckenden Bereich und den vertikalen und den horizontalen Bereich einschließende, endlose Antriebselemente (Ketten) mit Materialaufnahmeelementen (Bechern), wobei für die Antriebselemente und/oder Materialaufnahmeelemente an dem horizontalen Bereich eine obere und eine untere Führung vorgesehen ist und die untere Führung über ein Gelenkparallelogramm mit zwei nach unten gerichteten, schwenkbaren Verbindungslenkern gegenüber dem vertikalen Bereich in ihrer Lage veränderbar ist und mindestens ein Betätigungselement (z.B. Hydraulikzylinder) an einem der Verbindungslenker angreift.

Die gattungsbildende DE-A-36 08 116 offenbart einen Steilförderer, insbes. für die Schiffsentladung, der ein selbstschöpfendes Becherwerk aufweist, wobei die Becher bzw. die sie antreibenden Ketten sowohl um den vertikalen als auch um den horizontalen Bereich geführt sind. Der horizontale Bereich ist hierbei unter dem Vertikalbereich ausschwenkbar ausgeführt, wobei der Ausschwenkvorgang über Betätigungselemente, wie Hydraulikzylinder oder dgl., herbeiführbar ist. Der gesamte horizontale Bereich ist über zwei nach unten gerichtete Verbindungslenker am vertikalen Bereich angelenkt, wobei diese beiden Lenker zusammen mit dem vertikalen Bereich und dem unteren, horizontalen Bereich ein Gelenkparallelogramm bilden und an einem der nach unten gerichteten Verbindungslenker eine mit dem vertikalen Bereich verbundene Verstelleinrichtung (Hydraulikzylinder) angreift. Der horizontale Bereich ist gegenüber dem vertikalen Bereich mittels der zwischengeschalteten Lenker durch die Verstelleinrichtung verfahrbar und damit in seiner Höhenlage veränderbar. Nachteilig ist hier festzustellen, daß die in der Höhe bewegbare Masse des horizontalen Bereichs als verhältnismäßig groß anzusehen ist, da der gesamte horizontale Bereich das von den Ketten eingeschlossene Bauteil und den Obertrum der Becherkette einschließt und damit eine bemerkenswerte Höhe und Masse aufweist. Die große Masse macht sich insbesondere bei schlagartig von unten nach oben wirkenden Kräften bemerkbar, die beispielsweise durch einen infolge von Wellenbewegungen nach oben strebenden Schiffskörper hervorgerufen werden können. Problematisch erscheint ferner, daß der horizontale Bereich bei im wesentlichen nach unten gerichteten Lenkern nicht schnell genug ausweichen kann. Insbesondere bei schlagartiger Beanspruchung von unten können Beschädigungen an den Materialaufnahmeelementen sowie deren Führungen und Antriebselementen nicht ausgeschlossen werden.

Die DE-A-41 00 852 beschreibt einen Schiffsbe- oder -entlader, mit einem an einem Ausleger verlagerbaren, im wesentlichen vertikal sich erstreckenden Bereich, der an seinem unteren Ende mit einem im wesentlichen horizontal sich erstreckenden Bereich zusammenwirkt, sowie einem mittels Ketten angetriebenen, im vertikalen und horizontalen Bereich geführten Becherwerk. Der horizontale Bereich ist gegenüber dem vertikalen Bereich in Abhängigkeit von vertikalen Schiffsbewegungen bei gleichzeitigem Ausgleich der sich ändernde Kettenlängen verlagerbar. Der Vorgang des Anhebens bzw. Absenkens ist mittels Hydraulikzylindern herbeiführbar, die einerseits im Vertikalbereich und andererseits im Horizontalbereich vorgesehen sind, wobei die im Horizontalbereich vorgesehenen Hydraulikzylinder zum Längenausgleich der Ketten vorgesehen sind. Analog zum vorab beschriebenen Stand der Technik besteht auch hier das Problem, daß insbesondere bei schlagartig von unten auftretender Kraft, die im Vertikalbereich angeordnete Hydraulikzylinder nicht in der Lage sind, aufgrund des anzuhebenden Gewichtes des Horizontalbereiches, diesen Bewegungen entsprechend schnell zu folgen. Gleichzeitig müssen die im Horizontalbereich vorgesehenen Hydraulikzylinder ebenfalls schnell angesteuert werden, um die Kettenlänge entsprechend der Vertikalbewegung der im Vertikalbereich vorgesehenen Hydraulikzylinder auszugleichen. Auch hier kann nicht ausgeschlossen werden, daß infolge der Trägheit des Gesamtsystems Beschädigungen am Horizontalbereich, insbesondere den Materialaufnahmeelementen, eintreten können.

Die US-A-4 890 917 offenbart einen Schiffsentlader mit einem Becherwerk, der analog zu dem vorbeschriebenen Stand der Technik einen Vertikal- und einen Horizontalbereich aufweist, wobei die Becher mittels endloser Antriebselemente im Vertikal- und Horizontalbereich durchgehend geführt und umgelenkt sind. Der gesamte Horizontalbereich ist wie bei dem Steilförderer nach der DE-A-36 08 116 über nach unten gerichtete Verbindungslenker am vertikalen Bereich angelenkt, wobei der untere Teil des vertikalen Bereichs, der horizontale Bereich und die nach unten gerichteten Verbindungslenker, an welchen Betätigungselemente, insbesondere Hydraulikzylinder, angreifen, zusammen ein Gelenkparallelogramm bilden.

Aus Abstract of Japan, Vol.7,No. 163(M-229)[1308], July 16,1983, ist schließlich ein Schiffsentlader bekannt, dessen sich unten an den vertikalen Bereich abknickend anschließender Grab- oder Erfassungsbereich ein Gelenkparallelogramm mit einem fest mit dem vertikalen Bereich verbundenen, ebenfalls vertikal ausgerichteten Gestell aufweist. An dem Gestell sind zwei eher horizontal als vertikal ausgerichtete Lenker angelenkt, die gemeinsam ein senkrecht ausgerichtetes Koppelglied tragen, an dem wiederum eine auskragende untere horizontale Führung für Antriebselemente (Ketten) mit Materialaufnahmeelementen (Bechern) befestigt ist. Bei der Höhenbewegung eines zu entladenden Schiffs z. B. in Folge Wellengangs werden aber außer der unteren horizontalen Führung, die lediglich eine Teillänge des sich an den vertikalen Bereich anschließenden abgewinkelten Bereichs ausmacht, anteilmäßig noch die vom vertikalen Bereich zur unteren vertikalen Führung der von der unteren vertikalen Führung zum vertikalen Bereich führenden Bereiche einschließlich Antriebselementen und Materialaufnahmeelementen als Massen auf und ab bewegt.

Der Erfindung liegt die Aufgabe zugrunde, das im gattungsbildenden Teil des Hauptanspruchs beschriebene Becherwerk dahingehend weiterzubilden, daß bei möglichst geringer zu bewegender Masse ein möglichst schnelles Ansprechen der zu bewegenden Bauteile bei Auftreten von vertikalen Kräften bzw. bei Nachlassen derselben herbeigeführt werden kann.

Diese Aufgabe wird erfindungsgemäß dadurch gelöst, daß die obere Führung durch einen eigenen oberen Lenker des Gelenkparallelogramms gebildet ist und ein festes Teil des horizontalen Bereichs darstellt, daß die untere Führung durch einen eigenen unteren horizontalen Lenker des Gelenkparallelogramms und durch an diesem gelagerte Umlenkelemente gebildet ist und ein bewegliches Teil des waagerechten Bereichs darstellt, daß die das Gelenkparallelogramm vervollständigenden Verbindungslenker von dem Betätigungselement in der Grund- oder Arbeitsstellung geneigt gehalten werden und daß die Umlenkelemente der unteren Führungen im Bereich der mit dem unteren Lenker verbundenen Enden der Verbindungslenker angeordnet sind.

Führt ein Schiff und das in ihm geladene Schüttgut z.B. in Folge von Wellengang Höhenbewegungen aus, so braucht lediglich der untere Teil des horizontalen Bereichs, bestehend aus dem unteren Lenker, der unteren Kettenführung und den anteiligen Antriebs- und Materialaufnahmeelementen, und damit nur ein Bruchteil der Masse des vertikalen Bereichs bewegt zu werden. Entsprechend der geringeren Masse verringern sich auch die bei einer beschleunigten Bewegung entstehenden Massenkräfte und entsprechend die Gefahr von Beschädigungen.

Vorteilhafte Weiterbildungen des Erfindungsgegenstandes sind in den Unteransprüchen beschrieben. So hat sich für den Neigungswinkel der Verbindungslenker - bezogen auf eine gedachte Vertikalachse - in der Grund- oder Arbeitsstellung des Becherwerkes einen Bereich von 20° bis 40° als besonders günstig erwiesen. Dieser Bereich erlaubt einerseits eine unmittelbare, störungsfreie Lageveränderung der unteren Führung des horizontalen Bereichs und ermöglicht andererseits noch einen großen relativen Höhenunterschied nach oben. Die Bewegbarkeit der unteren Führung für die Antriebselemente kann noch dadurch begünstigt werden, daß das Verhältnis der Länge der Verbindungslenker zu der Länge der horizontalen Lenker kleiner ist als 1, insbesondere in einem Bereich zwischen 0,16 und 0,63 liegt.

Das Betätigungselement für mindestens ein Verbindungselement ist vorzugsweise als Hydraulikzylinder ausgebildet. In einer vorteilhaften Weiterbildung der Erfindung ist der Hydraulikzylinder im Bereich des von dem vertikalen Bereich abgewandten, vorderen Verbindungslenkers und im wesentlichen parallel zu den horizontalen Lenkern gelagert. In einer bevorzugten Ausführungsform greift der Hydraulikzylinder etwa auf halber Höhe des vorderen Verbindungslenkers an.

Der Hydraulikzylinder ist vorzugsweise in der Gestalt vorspannbar, daß er bei einer nach oben wirkenden, z.B. von einem Schiff hervorgerufene Gegenkraft, die größer oder gleich der nach unten wirkenden Kraft ist, abbläst.

Nach einer weiteren Ausgestaltung der Erfindung ist im Bereich des bzw. der vorderen Umlenkelemente eine Spannstation für die insbesondere als Ketten ausgebildeten Antriebselemente vorgesehen.

Das Becherwerk kann neben der Entladung von Schiffen auch für die Be- und/oder Entladung von Pontons, Schwimmdocks od. dgl. eingesetzt werden.

Der Erfindungsgegenstand ist in der Zeichnung dargestellt und wird im folgenden näher erläutert. Es zeigen:
- **Fig. 1**: Prinzipskizze eines nur teilweise dargestellten Becherwerkes in der Seitenansicht,
- **Fig. 2**: Vorderansicht des horizontalen Bereiches des Becherwerkes in vergrößerter Darstellung,
- **Fig. 3**: Teildarstellung des vorderen Umlenkbereiches des horizontalen Bereiches,
- **Fig. 4**: Prinzipskizze des horizontalen Bereiches mit daran angreifenden Kräften und
- **Fig. 5**: Kraftverlauf am horizontalen Bereich.

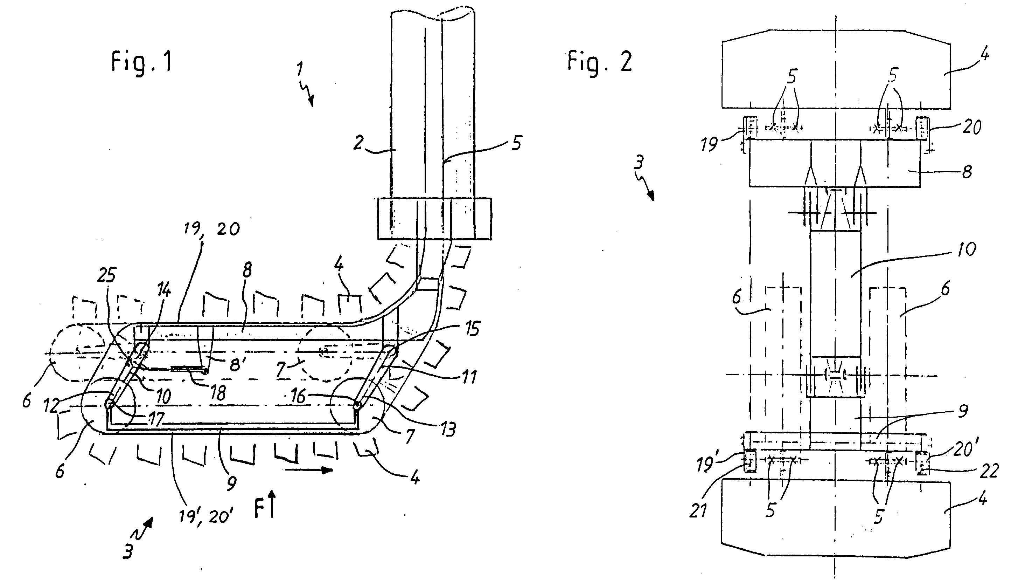

Fig. 1 zeigt ein Becherwerk 1, das in diesem Beispiel vorzugsweise für die Schiffsentladung eingesetzt werden soll. Das Becherwerk 1 weist einen vertikalen Bereich 2 und einen horizontalen Bereich 3 auf, wobei der horizontale Bereich 3 mit seinem unteren Teil gegenüber dem vertikalen Bereich 2 in seiner Lage veränderbar ist. Die als Materialaufnahmelemente ausgebildeten Becher 4 werden an beiden Seiten von als endlose Ketten ausgebildeten Antriebselementen 5 gehalten, die sowohl im vertikalen Bereich 2 als auch im horizontalen Bereich 3 durchgehend geführt sind und mittels als Kettensterne ausgebildeten Umlenkelementen 6, 7 umgelenkt werden. Der horizontale Bereich 3 weist obere und untere horizontal ausgerichtete Lenker 8, 9 sowie zwischen diesen unter einem Neigungswinkel von vorzugsweise ca. 60° - bzw. 30° bezogen auf eine vertikale Achse 26 - angeordnete Verbindungslenker 10, 11 auf, wobei die Beweglichkeit der Verbindungslenker 10, 11 über in den Endbereichen der horizontalen Lenker 8, 9 vorgesehene Gelenke 14, 15, 16, 17 gegeben ist. Die freien Enden 12, 13 der Verbindungslenker 10, 11 sind mit den Umlenkelementen 6, 7 verbunden, d.h. die von den Verbindungslenkern 10, 11 und dem unteren horizontalen Lenker 9 gebildeten Gelenkachsen 17, 16 sind identisch mit den Dreh- oder Lagerachsen der Umlenkelemente 6, 7.

Die horizontalen Lenker 8, 9 bilden zusammen mit den Umlenkelementen 6, 7 die Führung einerseits der Becher 4 und andererseits der Antriebselemente 5. Dabei stellt der obere Lenker 8 mit der Kettenführung 19, 20 für die Antriebselemente 5 mit den Bechern 4 einen oberen, festen Teil des horizontalen Bereichs 3 dar und der untere Lenker 9 mit den Umlenkelementen 6, 7 und der zugehörigen Kettenführung 19', 20' ein unteres bewegliches Teil.

Eine Verstellung der Neigung der Verbindungslenker 10, 11 erfolgt über mindestens einen Hydraulikzylinder 18, der parallel zum oberen Lenker 8 verläuft und gelenkig einerseits an einem vom Lenker 8 nach unten verlaufenden Bauteil 8' und andererseits etwa auf halber Höhe des vorderen Verbindungslenkers 10 angeordnet ist.

Bei von unten wirkender Kraft F, die durch den infolge von Wellenbewegungen nach oben strebenden (hier nicht weiter dargestellten) Schiffskörper erzeugt wird, kann nun die verhältnismäßig geringe Masse des unteren beweglichen Teils des horizontalen Bereichs 3, bestehend aus dem unteren horizontalen Lenker 9 mit den Kettenführungen 19', 20', den Umlenkelementen 6, 7 sowie einem Teil der Verbindungslenker 10, 11 und den anteiligen Antriebselementen 5 und Bechern 4, problemlos nachgeben und bis in die gestrichelt dargestellte Lage geführt werden, ohne daß es zu Beschädigungen an den Bauteilen kommt. Der Hydraulikzylinder 18 ist hierbei so einstellbar, daß der untere Teil des horizontalen Bereichs mit dem unteren Lenker 9, den Kettenführungen 19', 20' und den anteiligen Antriebselementen 5 und Bechern 4 lediglich mit einer solchen Kraft auf dem aufzunehmenden Material aufliegt, daß dieses problemlos aufgenommen werden kann und beim Ausweichen der betreffenden Bauteile die Materialaufnahme auch nicht behindert wird. Demzufolge kann bei wieder absinkendem Schiffskörper der untere Teil des horizontalen Bereichs 3 durch entsprechende Vorspannung des bzw. der Hydraulikzylinder 18 auf den eingangs eingestellten Wert auch wieder seine Ausgangslage einnehmen.

Bei dem dargestellten Ausführungsbeispiel beträgt die Länge der Verbindungslenker 10, 11 etwa nur ein Viertel der Länge der horizontalen Lenker 8, 9. Obwohl auch andere Verhältnisse, insbesondere ein Bereich von 0,16 bis 0,63 günstig sind, ist es schon vorteilhaft, wenn die Verbindungslenker 10, 11 nur überhaupt kürzer sind als die horizontalen Lenker 8, 9. Dies erleichtert das Nachgeben des unteren Teils des horizontalen Bereichs 3, da einerseits die Masse der Verbindungslenker 10, 11 kleiner ist und andererseits für eine vorgebbare Höhenänderung des unteren Teils des horizontalen Bereichs nur ein verhältnismäßig kleiner horizontaler Weg zurück gelegt zu werden braucht.

Fig. 2 zeigt einen Teilbereich des horizontalen Bereiches 3 in der Vorderansicht. Erkennbar sind die Becher 4, die vorderen Umlenkelemente 6 (in gestrichelten Linien), der obere horizontale Lenker 8, der untere horizontale Lenker 9, die als Doppelketten ausgebildeten Antriebselemente 5 und die Führungen 19, 20 am oberen Lenker 8 und die Führungen 19', 20' am unteren Lenker 9 für die Rollen 21, 22 der Becher 4.

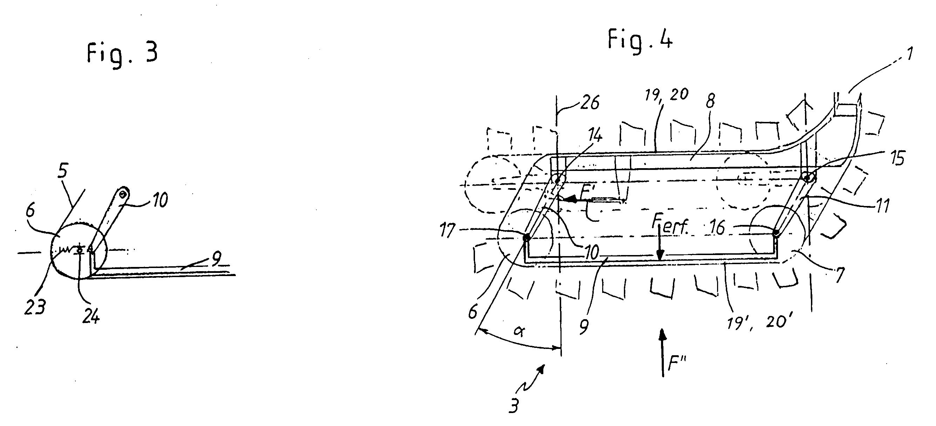

Fig. 3 zeigt eine Teilansicht des vorderen Umlenkbereichs (Umlenkelement 6) mit dem vorderen Verbindungslenker 10, dem unteren horizontalen Lenker 9 und einem nur angedeuteten Antriebselement 5, das mittels einer vor dem Lager 24 des vorderen Umlenkelementes 6 vorgesehenen Kettenspannstation 23 unter Spannung gehalten wird.

Fig. 4 zeigt den horizontalen Bereich 3 in einer Prinzipskizze. Dargestellt sind die Verbindungslenker 10 und 11 sowie der untere horizontale Lenker 9 im Zusammenwirken mit den Umlenkelementen 6 und 7. Die Gelenkpunkte 14 bis 17 sind lediglich angedeutet. Durch den horizontalen Pfeil ist die Wirkrichtung des Hydraulikzylinders 18 definiert, der in Abhängigkeit von dem aufzunehmenden Schüttgut auf eine vorgegebene Kraft F' vorgespannt ist. Die daraus resultierende vertikale Kraft F_{erf} soll in diesem Beispiel 5 kN betragen und ausreichen, um die hier nicht weiter dargestellten Becher 4 zu füllen. Der Winkel α zwischen den Verbindungslenkern 10, 11 und einer gedachten Vertikalachse 26 (Fig. 4) beträgt hierbei 30° (der Winkel zwischen dem Verbindungslenker 10 und dem unteren horizontalen Lenker 9 beträgt entsprechend 60°).

Mit dieser als Grundstellung bezeichneten Position kann das Becherwerk 1 nunmehr betrieben werden. Bei beispielsweise durch einen nach oben strebenden (nicht dargestellten) Schiffskörper wird eine Gegenkraft F'' erzeugt. Sobald die Summe aller Kräfte F'' die Kraft F_{erf} erreicht oder gar übersteigt, bläst der Hydraulikzylinder 18 ab, so daß die Verbindungslenker 10, 11 seitlich und der an dieser angelenkte untere horizontale Lenker 9 nach oben ausweichen können. Die Ausweichbewegung der Teile 6, 7, 9, 10 und 11 erfolgt hierbei auf Kreisbahnen. Eine Längenänderung der als Ketten ausgebildeten Antriebselemente 5 findet hierbei nicht statt, so daß ein Längenausgleich nicht herbeigeführt werden muß.

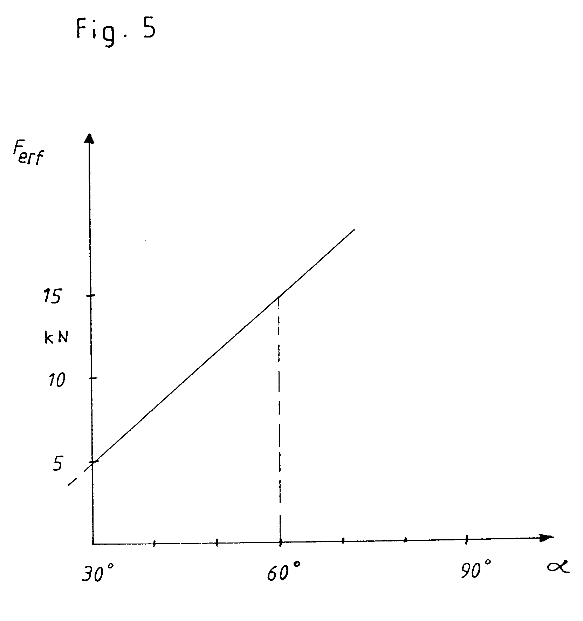

Fig. 5 zeigt in einem Koordinatensystem den Kraftverlauf am unteren, beweglichen Teil des horizontalen Bereichs 3, wobei die y-Achse die Kraft F_{erf} und die x-Achse den Winkel α definiert. Angenommen wird in diesem Beispiel ein linearer Kraftverlauf, der jedoch auch anders verlaufen kann. So ist - bezogen auf das Beispiel in Fig. 4 - bei einer erforderlichen Kraft F_{erf} von 5 kN ein Winkel α von 30° angegeben.

## Patentansprüche

1. Becherwerk (1), insbes. Schiffsbe- oder -entlader, mit einem im wesentlichen sich vertikal erstreckenden Bereich (2), einem an seinem unteren Ende sich anschließenden und sich im wesentlichen horizontal erstreckenden Bereich (3) und den vertikalen und horizontalen Bereich (2 bzw. 3) einschließende, endlose Antriebselemente (Ketten 5) mit Materialaufnahmeelementen (Bechern 4), wobei für die Antriebselemente (5) und/oder Materialaufnahmeelemente an dem horizontalen Bereich (3) eine obere und eine untere Führung (19, 20 bzw. 19', 20') vorgesehen ist und die untere Führung (19', 20') über ein Gelenkparallelogramm (Lenker 8 bis 11) mit zwei nach unten gerichteten, schwenkbaren Verbindungslenkern (10, 11) gegenüber dem vertikalen Bereich (2) in ihrer Lage veränderbar ist und mindestens ein Betätigungselement (Hydraulikzylinder 18) an einem der Verbindungslenker (10) angreift,
**dadurch gekennzeichnet,**
daß die obere Führung (19, 20) durch einen eigenen oberen horizontalen Lenker (8) des Gelenkparallelogramms gebildet ist und ein festes Teil des horizontalen Bereichs (3) darstellt,
daß die untere Führung (19', 20') durch einen eigenen unteren horizontalen Lenker (9) des Gelenkparallelogramms und durch an diesem gelagerte Umlenkelemente (6, 7) gebildet ist und ein bewegliches Teil des waagerechten Bereichs (3) darstellt,
daß die das Gelenkparallelogramm vervollständigenden Verbindungslenker (10, 11) von dem Betätigungselement (18) in der Grund- oder Arbeitsstellung geneigt gehalten werden
und daß die Umlenkelemente (6, 7) der unteren Führung (19', 20') im Bereich der mit dem unteren Lenker (9) verbundenen Enden der Verbindungslenker (10, 11) angeordnet sind.

2. Becherwerk nach Anspruch 1, **dadurch gekennzeichnet**, daß der Neigungswinkel (α) der Verbindungslenker (10, 11) - bezogen auf eine gedachte vertikale Achse (26) - in der Grundstellung des Becherwerkes (1) zwischen 20° und 40° beträgt.

3. Becherwerk nach Anspruch 1 oder 2, **dadurch gekennzeichnet,** daß das Verhältnis der Länge der Verbindungslenker (10, 11) zur Länge der horizontalen Lenker (8, 9) kleiner als 1 ist.

4. Becherwerk nach Anspruch 3, **dadurch gekennzeichnet,** daß das Verhältnis der Länge der Verbindungslenker (10, 11) zur Länge der horizontalen Lenker (8, 9) zwischen 0,16 und 0,63 liegt.

5. Becherwerk nach den Ansprüchen 1 bis 4, **dadurch gekennzeichnet,** daß das Betätigungselement als Hydraulikzylinder (18) ausgebildet ist.

6. Becherwerk nach Anspruch 5, **dadurch gekennzeichnet,** daß der Hydraulikzylinder (18) im Bereich des von dem vertikalen Bereich (2) abgewandten, vorderen Verbindungslenkers (10) gelagert ist.

7. Becherwerk nach den Ansprüchen 5 und 6, **dadurch gekennzeichnet**, daß der Hydraulikzylinder (18) im wesentlichen parallel zu den horizontalen Lenkern (8, 9) vorgesehen ist.

8. Becherwerk nach den Ansprüchen 6 und 7, **dadurch gekennzeichnet,** daß der Hydraulikzylinder (18) etwa auf halber Höhe (19) des vorderen Verbindungslenkers (10) angreift.

9. Becherwerk nach den Ansprüchen 5 bis 8, **dadurch gekennzeichnet,** daß der Hydraulikzylinder (18) dergestalt vorspannbar ist, daß er bei einer nach oben wirkenden Gegenkraft (F''), die der nach unten wirkenden Kraft (F_{erf}) entspricht oder größer ist, abbläst.

10. Becherwerk nach den Ansprüchen 1 bis 9, **dadurch gekennzeichnet,** daß im Bereich des bzw. der vorderen Umlenkelemente (6) eine Spannstation (23) für die insbesondere als Ketten ausgebildeten Antriebselemente (5) vorgesehen ist.

## Claims

1. Bucket elevator (1), in particular a ship loading or unloading system, with a region (2) extending essentially vertically, a region (3) connecting to its lower end and extending essentially horizontally, and endless driving elements (chains 5) having material collecting elements (buckets 4) and encompassing the vertical and horizontal regions (2 and 3 respectively), whereby an upper and a lower guide (19, 20 and 19', 20' respectively) are provided in the horizontal region (3) for the driving elements (5) and/or material collecting elements, and the position of the lower guide (19', 20') may be varied relative to the vertical region (2) by means of a parallelogram articulation arrangement (guide bars 8 to 11) with two downwardly directed swivelling connecting guide rods (10, 11), and at least one operating element (hydraulic cylinder 18) acts on one of the connecting guide rods (10),
characterised in that
the upper guide (19, 20) is formed by an upper horizontal guide bar (8) belonging to the parallelogram articulation arrangement, and constitutes a fixed part of the horizontal region (3);
that the lower guide (19', 20') is formed by a lower horizontal guide bar (9) belonging to the parallelogram articulation arrangement and by deflection elements (6, 7) mounted thereon, and constitutes a movable part of the horizontal region (3);
that the connecting guide bars (10, 11) completing the parallelogram articulation arrangement are held on an incline in the base or working position by the operating element (18);
and that the deflection elements (6, 7) of the lower guides (19', 20') are arranged in the region of the ends of the connecting guide bars (10, 11) connected to the lower guide bars (9).

2. Bucket elevator according to Claim 1, characterised in that the angle of inclination (α) of the connecting guide bars (10, 11) - calculated on the basis of an imaginary vertical axis (26) - in the base or working position of the bucket elevator (1) lies between 20° and 40°.

3. Bucket elevator according to Claim 1 or 2, characterised in that the ratio of the length of the connecting guide bars (10, 11) to the length of the horizontal guide bars (8, 9) is smaller than 1.

4. Bucket elevator according to Claim 3, characterised in that the ratio of the length of the connecting guide bars (10, 11) to the length of the horizontal guide bars (8, 9) lies between 0.16 and 0.63.

5. Bucket elevator according to Claims 1 to 4, characterised in that the operating element is in the form of a hydraulic cylinder (18).

6. Bucket elevator according to Claim 5, characterised in that the hydraulic cylinder (18) is mounted in the region of the front connecting guide bar (10) facing away from the vertical region (2).

7. Bucket elevator according to Claims 5 and 6, characterised in that the hydraulic cylinder (18) is essentially parallel to the horizontal guide bars (8, 9).

8. Bucket elevator according to Claims 6 and 7, characterised in that the hydraulic cylinder (18) acts on the front connecting guide bar (10) at approximately half its height (19).

9. Bucket elevator according to Claims 5 to 8, characterised in that the hydraulic cylinder (18) may be initially stressed in such a manner that it will discharge in the case of an upwardly directed counter-force (F''), which corresponds to or is greater than the downwardly directed force (F_{erf}).

10. Bucket elevator according to Claims 1 to 9, characterised in that a tension station (23) is provided for the driving elements (5), provided in particular in the form of chains, in the region of the front deflection element or elements (6).

## Revendications

1. Transporteur à godets (1), en particulier chargeur ou déchargeur de bateaux, avec une zone (2) s'étendant essentiellement dans le sens vertical, une zone (3) assemblée à l'extrémité inférieure de la zone (2) et s'étendant essentiellement dans le sens horizontal, et des éléments d'entraînement (chaînes 5) renfermant les zones verticale et horizontale (2 respectivement 3) et pourvus d'éléments de levage de matières (godets 4), où pour les éléments d'entraînement (5) et/ou les éléments de levage de matières sont prévus, à la zone horizontale (3), un guidage supérieur et un guidage inférieur (19,20 ou 19', 20'), et où le guidage inférieur (19', 20') est variable en sa position par rapport à la zone verticale (2) au moyen d'un parallélogramme articulé (guides 8 à 11) avec deux guides de raccordement (10, 11) pivotables dirigés vers en bas, et où au moins un élément de commande (vérin hydraulique 18) s'applique à un des guides de raccordement (10), transporteur à godets caractérisé en ce que le guidage supérieur (19, 20) est formé par un propre guide supérieur horizontal (8) du parallélogramme articulé et représente une pièce fixe de la zone horizontale (3), que le guidage inférieur (19', 20') est formé par un propre guide inférieur horizontal (9) du parallélogramme articulé et par des éléments de renvoi (6, 7) disposés à ce dernier et représente une pièce mobile de la zone horizontale (3), que les guides de raccordement (10, 11) complétant le parallélogramme articulé sont maintenus inclinés, dans la position de base ou de travail, par l'élément de commande (18), et que les éléments de renvoi (6, 7) du guidage inférieur (19', 20') sont disposés dans la zone des extrémités de guides de raccordement (10, 11) raccordées au guide inférieur (9).

2. Transporteur à godets suivant revendication 1, caractérisé en ce que l'angle d'inclinaison (α) des guides de raccordement (10, 11) se situe, dans la position de base du transporteur à godets (1), entre 20° et 40° par rapport à un axe vertical imaginaire (26).

3. Transporteur à godets suivant revendication 1 ou 2, caractérisé en ce que le rapport entre la longueur des guides de raccordement (10, 11) et la longueur des guides horizontaux (8, 9) est inférieur à 1.

4. Transporteur à godets suivant revendication 3, caractérisé en ce que le rapport entre la longueur des guides de raccordement (10, 11) et la longueur des guides horizontaux (8, 9) se situe entre 0,16 et 0,63.

5. Transporteur à godets suivant les revendications 1 à 4, caractérisé en ce que l'élément de commande est conçu comme vérin hydraulique (18).

6. Transporteur à godets suivant revendication 5, caractérisé en ce que le vérin hydraulique (18) est disposé dans la zone du guide de raccordement avant (10) détourné de la zone verticale (2).

7. Transporteur à godets suivant les revendications 5 et 6, caractérise en ce que le vérin hydraulique (18) est essentiellement prévu parallèlement aux guides horizontaux (8, 9).

8. Transporteur à godets suivant les revendications 6 et 7, caractérisé en ce que le vérin hydraulique (18) attaque à peu près à mi-hauteur (19) du guide de raccordement avant (10).

9. Transporteur à godets suivant les revendications 5 à 8, caractérisé en ce que le vérin hydraulique (18) peut être précontraint de telle manière qu'il décharge s'il y a une force antagoniste (F'') agissant vers le haut qui correspond ou qui est plus grande que la force F_{erf}) agissant vers le bas.

10. Transporteur à godets suivant les revendications 1 à 9, caractérisé en ce que, dans la zone de l'élément ou des éléments de renvoi avant (6), il est prévu un poste de tension (23) pour les éléments d'entraînement (5) conçus en particulier comme chaînes.
